# EUROPÄISCHE PATENTSCHRIFT

(11) **EP 2 794 165 B1**
(45) Veröffentlichungstag und Bekanntmachung des Hinweises auf die Patenterteilung: **08.06.2022**
(21) Anmeldenummer: 12783985.0
(22) Anmeldetag: 07.11.2012
(51) Int. Cl.: B23D 61/12, B23D 65/00

(54) **STICH- BZW. SÄBELSÄGEBLATT FÜR EINE WERKZEUGMASCHINE**
KEYHOLE SAW BLADE OR SABRE SAW BLADE FOR A POWER TOOL
LAME DE SCIE SAUTEUSE POUR UNE MACHINE-OUTIL

(30) Priorität: 20.12.2011 DE 102011089110
(43) Veröffentlichungstag der Anmeldung: 29.10.2014
(73) Patentinhaber: Robert Bosch GmbH, 70442 Stuttgart (DE)
(72) Erfinder: BOZIC, Milan, CH-4500 Solothurn (CH)
(86) Internationale Anmeldenummer: PCT/EP2012/071986
(87) Internationale Veröffentlichungsnummer: WO 2013/091980

(56) Entgegenhaltungen:
- WO-A1-2011/063438
- DE-A1- 1 503 939
- DE-A1- 10 014 222
- GB-A- 2 179 593
- JP-A- 2007 326 194
- US-A- 4 036 236
- US-A- 4 345 499

## Beschreibung

Die Erfindung bezieht sich auf ein Stich- bzw. Säbelsägeblatt für eine Werkzeugmaschine nach dem Oberbegriff des Anspruches 1. Ein solches Stich- bzw. Säbelsägeblatt ist aus DE 1 503 939 A bekannt.

### Stand der Technik

In der US 4,036,236 wird ein Stich- bzw. Säbelsägeblatt für eine chirurgische Säge beschrieben, das ein geradliniges Stammblatt an einem Befestigungsschaft aufweist, wobei eine Längskante des Stammblattes die Schneidkante mit Schneidzähnen bildet. Über die gesamte axiale Länge ist eine nutförmige Vertiefung in das Sägeblatt eingebracht, die durch Eindrücken an einer der Seitenflächen des Sägeblatts erzeugt wird, so dass an der gegenüberliegenden Seitenfläche ein entsprechender linien- bzw. streifenförmiger Überstand über die Länge des Sägeblatts entsteht. Mit der Nut an der einen Seite bzw. dem Überstand an der gegenüberliegenden Seite sollen Biegeschwingungen des dünn ausgeführten Sägeblatts reduziert werden.

In der GB 2 179 593 A wird ein Sägeblatt für eine Stich- bzw. Säbelsäge beschrieben, das mehrere Nuten in den Seitenflächen aufweist, die sich in Längsrichtung, also parallel zur Schneidkante mit den Zähnen erstreckt. Durch das Einbringen der Nuten soll der Kontakt zwischen den Seitenflächen des Sägeblatts und dem zu bearbeitenden Werkstück reduziert und damit die Reibung minimiert werden.

Ferner wird auf die Druckschriften US4345499, DE1503939 und JP2007326194A verwiesen.

### Offenbarung der Erfindung

Der Erfindung liegt die Aufgabe zu Grunde, mit einfachen konstruktiven Maßnahmen ein Sägeblatt für eine Stich- bzw. Säbelsäge, die im Betrieb eine oszillierende Hubbewegung ausführt, so auszubilden, dass über einen langen Betriebszeitraum eine präzise Werkstückbearbeitung möglich ist.

Diese Aufgabe wird erfindungsgemäß mit den Merkmalen des Anspruches 1 gelöst. Die Unteransprüche geben zweckmäßige Weiterbildungen an.

Die Erfindung bezieht sich auf ein Sägeblatt für eine Stich- bzw. Säbelsäge, die im Betrieb eine oszillierende, hin und her gehende translatorische Arbeitsbewegung ausführt. Das Sägeblatt Z des Anspruchs 1 erhöht die Festigkeit und verändert die Spannungseigenschaften, wodurch sowohl die Eigenfrequenz des Sägeblattes als auch die Ausbreitung von Vibrationen bzw. Querschwingungen im Sägeblatt positiv beeinflusst wird. Durch die Z Einprägungen wird üblicherweise das Material im Sägeblatt verdichtet. Auch im Falle hoher punktueller Belastungen auf das Sägeblatt, beispielsweise bei einem Kontakt des Sägeblatts mit einem harten Gegenstand, oder bei einer hohen Biegebelastung ist die Bruchgefahr aufgrund der erhöhten Steifigkeit bzw. Festigkeit reduziert, welche über die Einprägungen erzielt wird. Dementsprechend ist eine höhere Betriebssicherheit gegeben, außerdem wird die Qualität des Arbeitsergebnisses verbessert und kann über einen längeren Betriebszeitraum aufrechterhalten werden.

Vorteilhaft ist des Weiteren, dass die Z Einprägungen in einer einfachen Weise hergestellt werden Z können. Die Einprägungen führen zu einer Verfestigung im Stammblatt und damit einhergehend zu einer veränderten Spannungseigenschaft.

Die Z Einprägungen können durch Prägen erzeugt werden; in diesem Fall ist auf einer Seitenfläche des Stammblattes eine Einprägung in Form einer Vertiefung vorhanden, auf der gegenüberliegenden Seitenfläche erzeugt das Prägen dagegen eine korrespondierende Erhöhung. Die durch Prägen erzeugten Einprägungen weisen eine Einprägtiefe von vorzugsweise mindestens 0.1 mm auf. Die Einprägungen sind alle in die gleiche Seitenfläche eingebracht, Z so dass an dieser Seitenfläche nur Vertiefungen und an der gegenüberliegenden Seitenfläche nur Erhebungen vorhanden sind. Möglich ist es aber auch, die Einprägungen durch Walzen zu erzeugen. Bei durch Walzen hergestellten Einprägungen beträgt die Einprägtiefe vorzugsweise maximal ein Drittel der Blattdicke, beispielsweise maximal 0.2 mm oder 0.1 mm und kann gegebenenfalls im hundertstel Millimeterbereich liegen, beispielsweise bei 0.01mm. Vorteilhaft hierbei ist es auch, dass das Sägeblatt von gegenüberliegenden Seiten eingedrückt wird, so dass keine Erhebungen an einer Seitenfläche des Sägeblattes entstehen. Es handelt sich bei der gewalzten Einprägung nicht um eine Nut, sondern um eine von außen kaum sicht- oder spürbare Eindrückung, die zu einer Materialverdichtung im Stammblatt und damit einhergehend zu einer veränderten Spannungseigenschaft führt. Dementsprechend dient die Einprägung nicht zu verbesserten Spanableitung, Wärmeableitung oder zur Reduzierung des Reibkontakts mit dem zu bearbeitenden Werkstück, sondern zur Steifigkeitserhöhung und einer gewünschten Änderung der Spannungseigenschaft.

Gegebenenfalls können lokal im Sägeblatt zusätzlich zu den Einprägungen chemische Nachbearbeitungen, beispielsweise durch Beschichten vorgenommen werden, um die Spannung im Sägeblatt zu beeinflussen. Alternativ oder zusätzlich sind auch lokal thermische Nachbearbeitungen, beispielsweise Induktionshärten, möglich.

Es kommen verschiedenartig ausgeführte Einprägungen in Betracht. Möglich sind z.B. linienförmige oder streifenförmige Einprägungen, welche entweder geradlinig oder gekrümmt ausgeführt sind bzw. geradlinige und gekrümmte Abschnitte aufweisen können. Im Falle einer linienförmigen Einprägung ist die Breite sehr gering, im Falle einer streifenförmigen Einprägung liegt die Breite vorzugsweise bei maximal ein Drittel der Blatthöhe, beispielsweise 3 mm, wobei ggf. auch größere Breiten möglich sind. Grundsätzlich möglich sind auch flächige Einprägungen auf dem Sägeblatt.

Des Weiteren ist es möglich, insbesondere im Falle einer linienförmigen Einprägung, umlaufend geschlossen ausgebildete geometrische Muster zu erzeugen, beispielsweise annähernd rechteckförmige Einprägungen, dreieckförmige Einprägungen oder dergleichen. Die Einprägung an sich ist linien- oder streifenförmig und bildet die Randkontur des geometrischen Musters.

Es kann zweckmäßig sein, dass sich die Einprägung im Falle einer linien- oder streifenförmigen Ausbildung zumindest abschnittsweise in Längsrichtung, also parallel zur Schneidkante erstreckt. Grundsätzlich möglich ist aber auch eine winklige Ausrichtung der linien- bzw. streifenförmigen Einprägung gegenüber der Längsachse oder ein orthogonaler Verlauf, also in Querrichtung des Sägeblattes. Des Weiteren sind verschiedenartige Muster von Einprägungen möglich, welche als Kombination unterschiedlicher Einprägungen darstellbar sind, beispielsweise eine Kombination geradliniger Einprägungen, die abschnittsweise in Längs- und in Querrichtung bzw. unter einem Winkel zur Längsachse verlaufen.

Möglich sind auch definierte Muster von Einprägungen, die sich in Abhängigkeit der axialen Position ändern.

Die linien- bzw. streifenförmigen Einprägungen können so in das Stammblatt eingebracht sein, dass zumindest zwei Eckpunkte des Stammblattes von den Einprägungen verbunden werden. Vorzugsweise werden alle vier Eckpunkte des Stammplatzes von linien- bzw. streifenförmigen Einprägungen verbunden, wobei grundsätzlich verschiedene Ausführungsvarianten in Betracht kommen. Möglich ist es beispielsweise, diagonal verlaufende Einprägungen einzubringen, die diagonal liegende Eckpunkte des Stammblattes verbinden. In Betracht kommt zusätzlich eine Verbindung über in Längsrichtung bzw. in Querrichtung verlaufende Einprägungen zwischen den Eckpunkten im Stammblatt. Sowohl mit diagonalen als auch mit sich in Längsrichtung bzw. quer zur Längsrichtung erstreckenden Einprägungen wird eine Rahmenkonstruktion mit Einprägungen geschaffen, welche die Festigkeit des Stammblattes in signifikanter Weise verbessert. Die diagonalen und/oder sich in Längsrichtung bzw. Querrichtung erstreckenden Einprägungen können bis zu den jeweiligen Eckpunkten verlaufen. Gemäß weiterer Ausführung ist es aber auch möglich, dass eine derartige Einprägung auf Abstand zu einem oder zwei Eckpunkten liegt, wobei in diesem Fall die Längsachse der Einprägung durch die Eckpunkte führt.

Es sind im Übergangsbereich zwischen dem Stammblatt und dem Befestigungsschaft mehrere Einprägungen Z vorgesehen, da der Übergangsbereich insbesondere im Falle einer hohen Biegebelastungen starken Beanspruchungen unterliegt und mit dem Einbringen der Einprägungen die Festigkeit im Übergangsbereich erhöht werden kann, so dass die Gefahr eines Bruches reduziert ist. Die Einprägungen können auf Seiten des Befestigungsschaftes und/oder unmittelbar benachbart zu Befestigungsschaft auf Seiten des Stammblattes angeordnet sein.

In das Stammblatt kann zumindest eine Aussparung eingebracht sein, die von mindestens einer Einprägung begrenzt ist. Die Aussparung, welche beispielsweise durch Stanzen erzeugt werden kann, reduziert das Massenträgheitsmoment des Stammblattes, was einen positiven Effekt, insbesondere im Hinblick auf eine geringere Schwingungsübertragung, auf die Standzeit und die Bedienerfreundlichkeit hat. Außerdem können kleiner dimensionierte Antriebsmotoren eingesetzt werden. Die Einprägung im Stammblatt wirkt einer durch die Ausnehmung hervorgerufenen Stabilitätsminderung entgegen. Somit können durch die Kombination von Aussparung und Einprägung verschiedene Vorteile kombiniert werden, nämliche eine verringerte Masse bzw. ein Massenträgheitsmoment und eine verbesserte Stabilität mit verringerter Schwingungsausbreitung.

Vorteilhafterweise sind in das Stammblatt mehrere Aussparungen eingebracht, die jeweils von zumindest einer, vorzugsweise linien- bzw. streifenförmigen Einprägung begrenzt sind. Es kann zweckmäßig sein, an mindestens zwei Seiten einer Aussparung, gegebenenfalls an allen Seiten der Aussparung Einprägungen vorzusehen, um der Verringerung der Stabilität durch die Aussparungen entgegenzuwirken.

Es kommen verschiedene Querschnittsgeometrien der Aussparungen in Betracht, insbesondere eckige, beispielsweise dreieckige oder rechteckige Geometrien.

Die Aussparungen sind vorzugsweise von Einprägungen begrenzt, die im Wege des Prägens hergestellt werden. Grundsätzlich möglich sind aber auch durch Walzen erzeugte Einprägungen, welche Aussparungen im Stammblatt begrenzen.

Weitere Vorteile und zweckmäßige Ausführungen sind den weiteren Ansprüchen,

der Figurenbeschreibung und den Zeichnungen zu entnehmen. Es zeigen:
Fig. 1 in Seitenansicht ein Z nicht erfindungsgemäßes Sägeblatt für eine Stich- bzw. Säbelsäge, bestehend aus einem Stammblatt mit einer Schneidkante mit Schneidzähnen und einem einteilig ausgebildeten Befestigungsschaft, mit einer sich in Längsrichtung des Sägeblattes erstreckenden Einprägung, welche parallel und mit Abstand zur Schneidkante verläuft,
Fig. 2 bis 9 nicht erfindungsgemäße Sägeblätter in verschiedenen Ausführungsvarianten mit unterschiedlichen Einprägungen,
Fig. 10 ein nicht erfindungsgemäßes Sägeblatt mit Einprägungen und Aussparungen,
Fig. 11 das Sägeblatt aus Fig. 10 im Schnitt,
Fig. 12 der Befestigungsschaft eines Sägeblattes und der Übergangsbereich zum Stammblatt mit darin eingebrachten Einprägungen,
Fig. 13 eine nicht erfindungsgemäße ähnliche Darstellung wie Fig. 12, jedoch mit einer sich bis zu der oberen Kante des Sägeblatts erstreckenden Einprägung,
Fig. 14 der Befestigungsschaft eines Sägeblattes und der Übergangsbereich zum Stammblatt in einer weiteren Ausführungsvariante,
Fig. 15 der Befestigungsschaft eines Sägeblattes und der Übergangsbereich zum Stammblatt in einer weiteren Z nicht erfindungsgemäße nicht erfindungsgemäßen Ausführungsvariante.

In den Figuren sind gleiche Bauteile mit gleichen Bezugszeichen versehen. Die folgenden Figuren beziehen sich jeweils auf ein Sägeblatt für eine Werkzeugmaschine mit translatorischer, oszillierender, hin und her gehender Arbeitsbewegung. Bei der Werkzeugmaschine handelt es sich insbesondere um eine Handwerkzeugmaschine, vorzugsweise um eine Stich- bzw. Säbelsäge.

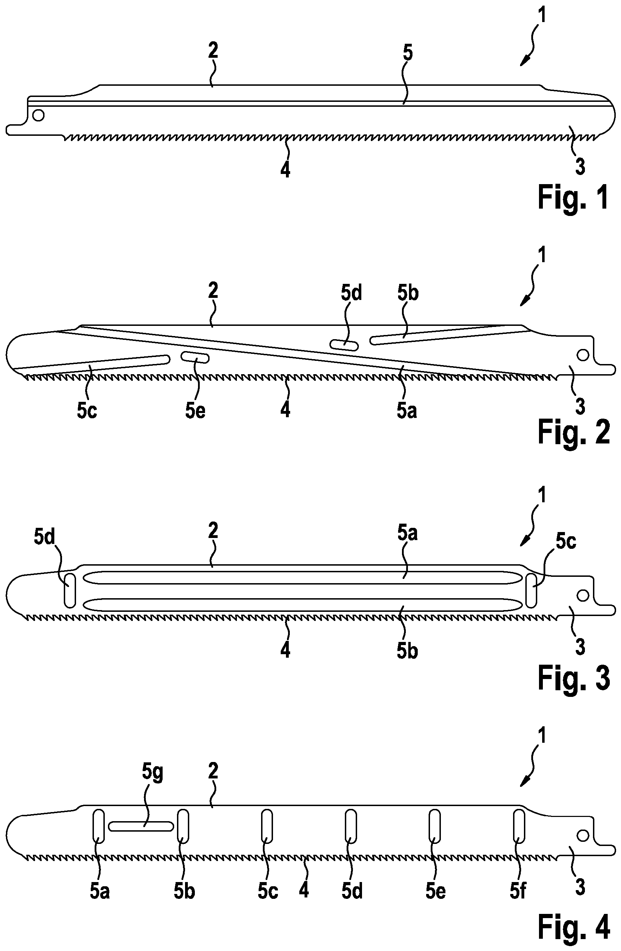

Z Das nicht erfindungsgemäße nicht erfindungsgemäßen Sägeblatt 1 gemäß Fig. 1 umfasst ein Stammblatt 2 sowie einen Befestigungsschaft 3, über den das Sägeblatt mit einer Aufnahmeeinrichtung der Werkzeugmaschine verbunden wird. Das Stammblatt 2 und der Befestigungsschaft 3 sind einteilig ausgebildet. Eine Längskante des Stammblattes 2 bildet eine Schneidkante 4 mit Schneidzähnen, welche sich zwischen dem Befestigungsschaft 3 und der vorderen Spitze des Stammblattes 2 erstrecken. Die Schneidkante 4 ist geradlinig ausgebildet, ggf. kann die Schneidkante 4 auch geringfügig konvex gebogen ausgeführt sein.

Das Sägeblatt 1 ist mit einer geradlinigen Ausprägung 5 versehen, die sich in Längsrichtung des Sägeblattes 1 und über die gesamte axiale Länge des Sägeblattes, also sowohl über den Befestigungsschaft 3 als auch das Stammblatt 2 erstreckt. Die Einprägung 5 ist linienförmig ausgebildet und weist eine nur geringe Breite auf. Die Einprägung 5 wird vorzugsweise durch Prägen erzeugt, sie kann ggf. auch durch Walzen hergestellt werden und hat eine Verfestigung des Sägeblattes 1 zur Folge, wodurch sich die Spannungs- und Schwingungsübertragungseigenschaften ändern. Beim Erzeugen der Einprägung 5 wird kein Material vom Sägeblatt 1 abgetragen.

In Fig. 2 ist eine nicht erfindungsgemäße Ausführungsvariante eines Sägeblattes 1 dargestellt, bei dem mehrere, streifenförmige Einprägungen 5 in das Stammblatt 2 eingebracht sind, die sich bis in den Übergangsbereich zum Befestigungsschaft 3 erstrecken. Eine erste Einprägung 5a verläuft diagonal zwischen der Spitze des Stammblattes 2 und dem gegenüberliegenden Übergangsbereich zum Befestigungsschaft 3. Zwei weitere geradlinige, streifenförmige Einprägungen 5b, 5c sind ebenfalls diagonal ausgerichtet und schließen mit der ersten Diagonale 5a einen Winkel ein, wobei die beiden Einprägungen 5b und 5c sich jeweils nur über einen Teilbereich erstrecken. Zusätzlich sind zwei kleinere Einprägungen 5d und 5e eingebracht, die jeweils zwischen der Stirnseite der Einprägung 5b bzw. 5c und der durchgehend ausgebildeten Diagonalen 5a angeordnet sind.

Im nicht erfindungsgemäßen Ausführungsbeispiel gemäß Fig. 2 sind die Einprägungen streifenförmig mit einer definierten Breite ausgebildet, welche vorzugsweise maximal 3 mm beträgt.

Im nicht erfindungsgemäßen Ausführungsbeispiel gemäß Fig. 3 weist das Stammblatt 2 zwei parallel verlaufende, sich in Achsrichtung erstreckende Einprägungen 5a, 5b auf, die geradlinig und streifenförmig ausgebildet sind und jeweils einen geringen Abstand zur Schneidkante 4 bzw. zur gegenüberliegenden Seitenkante des Stammblattes aufweisen. Im Bereich ihrer Stirnkanten befinden sich in Querrichtung verlaufende Einprägungen 5c bzw. 5d, wobei die erste, in Querrichtung angeordnete Einprägung 5c im Übergangsbereich zwischen dem Stammblatt 2 und dem Befestigungsschaft 3 und die gegenüberliegend angeordnete, in Querrichtung verlaufende Einprägung 5d benachbart zur Spitze des Stammblattes 2 angeordnet ist.

Im nicht erfindungsgemäßen Ausführungsbeispiel gemäß Fig. 4 sind insgesamt sechs in Querrichtung verlaufende, streifenförmige und geradlinig ausgebildete Erstreckungen 5a bis 5f in das Stammblatt 2 eingebracht, die jeweils auf Abstand zur Schneidkante 4 bzw. zur gegenüberliegenden Seitenkante des Stammblattes 2 liegen. Die Einprägung 5f befindet sich im Übergangsbereich zwischen dem Stammblatt 2 und dem Befestigungsschaft 3. Zusätzlich ist zwischen dem ersten, der Spitze benachbarten und sich in Querrichtung erstreckenden Einprägung 5a und der darauffolgenden, beabstandeten Einprägung 5b ein Einprägungsabschnitt 5g g eingebracht, der sich in Längsrichtung erstreckt und etwa mittig im Stammblatt 2 verläuft.

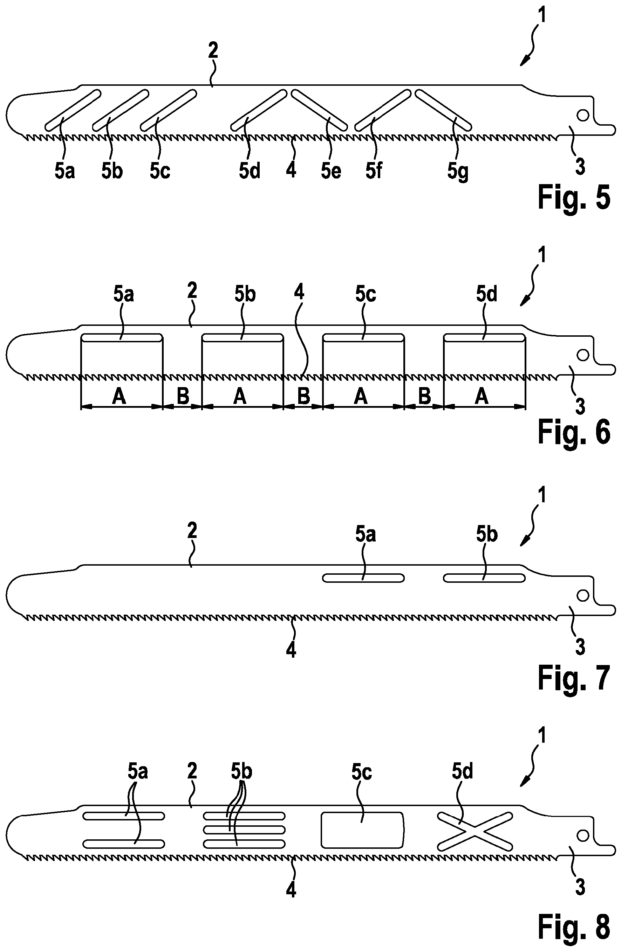

Im nicht erfindungsgemäßen Ausführungsbeispiel gemäß Fig. 5 sind in das Stammblatt des Sägeblatts 1 mehrere schräg verlaufende Einprägungen 5a bis 5g eingebracht, die jeweils in einem annähernd 45°-Winkel zur Längsachse liegen. Die ersten drei, der Spitze benachbarten Einprägungen 5a bis 5c verlaufen parallel zueinander. Die Einprägungspaare 5d und 5e sowie 5f und 5g bilden jeweils eine dreieckförmige Konfiguration.

Im Z nicht erfindungsgemäßen Ausführungsbeispiel gemäß Fig. 6 sind in das Stammblatt 2 des Sägeblatts 1 insgesamt vier jeweils geradlinig ausgebildete, streifenförmige Einprägungen 5a bis 5d eingebracht, die sich in Längsrichtung erstrecken und in der Seitenfläche des Stammblattes asymmetrisch liegen. Die Einprägungen 5a bis 5d sind benachbart zu der Seitenkante angeordnet, die der Schneidkante 4 gegenüberliegt; der Abstand zur Seitenkante ist geringer als zur Schneidkante 4. Zu erkennen ist auch, dass sämtliche Erstreckungen 5a bis 5d die gleiche Länge A aufweisen und dass der Abstand B zwischen aufeinander folgenden, in einer gemeinsamen Linie liegenden Einprägungen jeweils gleich groß ist.

Im nicht erfindungsgemäßen Ausführungsbeispiel gemäß Fig. 7 sind zwei Einprägungen 5a, 5b in das Stammblatt 2 eingebracht, die analog zum Ausführungsbeispiel gemäß Fig. 6 jeweils geradlinig und außermittig angeordnet sind und benachbart zu der der Schneidkante 4 gegenüberliegenden Seitenkante angeordnet sind. Die beiden geradlinigen Einprägungen 5a, 5b befinden sich in dem hinteren, dem Befestigungsschaft 3 zugewandten Teil des Stammblattes 2.

Im nicht erfindungsgemäßen Ausführungsbeispiel gemäß Fig. 8 sind in das Sägeblatt 1 eine Mehrzahl unterschiedlich ausgebildeter Einprägungen 5a, 5b, 5c und 5d eingebracht. Die Einprägungen 5a sind streifenförmig und sich in Längsrichtung erstreckend ausgebildet und befinden sich benachbart zur Spitze des Sägeblattes 1. Die darauffolgenden Einprägungen 5b sind ebenfalls streifenförmig und sich in Längsrichtung erstreckend ausgeführt; im Unterschied zu den zwei Einprägungen 5a sind nun drei Einprägungen 5b vorgesehen. Dahinter befindet sich eine Einprägung 5c in Form eines flächigen Rechteckes. Anschließend ist in das Stammblatt 2 benachbart zum Befestigungsschaft 3 eine kreuzförmige Einprägung eingebracht.

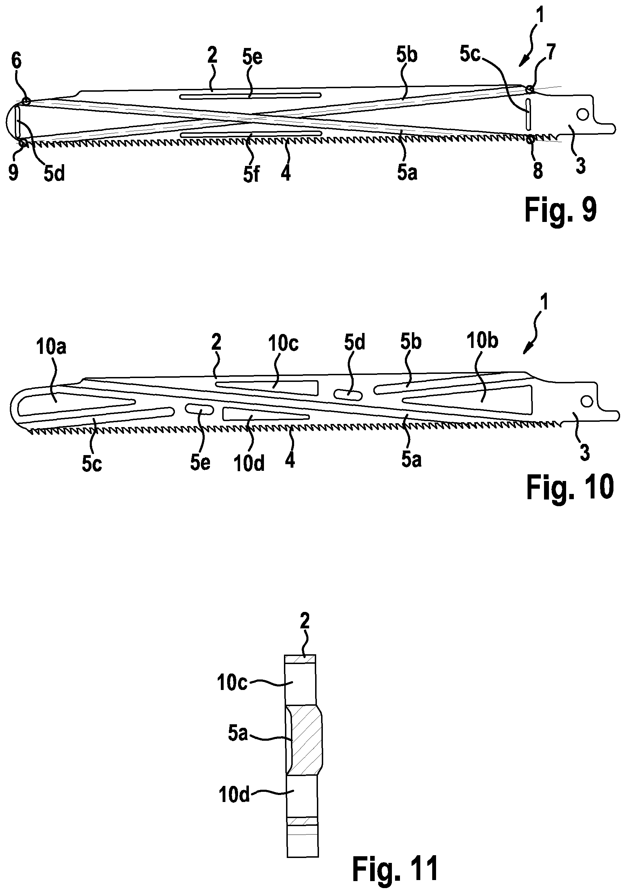

In Fig. 9 ist eine weitere Z nicht erfindungsgemäße Ausführungsvariante für ein Sägeblatt 1 dargestellt, in dessen Stammblatt 2 verschiedene Einprägungen 5a bis 5f eingebracht sind. Zwei Einprägungen 5a, 5b verlaufen diagonal zwischen den Eckpunkten 6, 7, 8 und 9 des zumindest annähernd rechteckförmigen Stammblattes 2. Die diagonal verlaufenden Einprägungen 5a und 5b können sich schneiden, wobei ggf. zumindest eine der Einprägungen eine Unterbrechung aufweist, um übereinander liegende Einprägungen zu vermeiden.

Des Weiteren sind zwei Einprägungen 5e und 5f in das Stammblatt 2 eingebracht, die sich benachbart zu der Schneidkante bzw. der der Schneidkante gegenüberliegenden Seitenkante, also in Längsrichtung des Sägeblattes erstrecken. Die in Längsrichtung verlaufenden Einprägungen 5e und 5f weisen eine kürzere Länge auf als das Stammblatt 2, die Längsachsen der Einprägungen 5e und 5f schneiden jedoch die Eckpunkte 6 und 7 bzw. 8 und 9.

Jeweils zwei Eckpunkte 7 und 8 bzw. 6 und 9 im hinten liegenden bzw. vorne liegenden Bereich des Stammblattes 2 sind von Einprägungen 5c bzw. 5d verbunden, welche sich in Querrichtung, also quer zur Längsachse des Sägeblattes erstrecken. Die Einprägungen 5c und 5d können die jeweiligen Eckpunkte unmittelbar miteinander verbinden; möglich sind aber auch Ausführungen, in denen die Einprägungen in Querrichtung kürzer ausgebildet sind, so dass die Längsachsen der Einprägungen durch die Eckpunkte führen.

Insgesamt bilden die Einprägungen eine rahmenförmige Konstruktion, welche die Festigkeit des Stammblattes 2 in signifikanter Weise verbessert. Grundsätzlich genügt es, beispielsweise nur zwei Diagonale 5a und 5b zwischen den Eckpunkten 6 und 8 bzw. 7 und 9 vorzusehen, um nach Art eines Rahmens eine Verfestigung des Stammblattes zu erzielen. Alternativ hierzu sind nur in Längsrichtung bzw. sich in Querrichtung erstreckende Einprägungen 5c, 5d, 5e und 5f vorgesehen, die sich zwischen den Eckpunkten erstrecken. In jedem Fall ist es möglich, dass die Einprägungen die Eckpunkte unmittelbar verbinden oder jeweils auf Abstand vom nächstliegenden Eckpunkt liegen. Des Weiteren kommt eine Kombination von diagonal verlaufenden Einprägungen und in Längsrichtung bzw. Querrichtung verlaufenden Einprägungen, so wie dies in Fig. 9 dargestellt ist, in Betracht.

In Fig. 10 ist ein weiteres nicht erfindungsgemäßes Ausführungsbeispiel dargestellt, bei dem in das Stammblatt 2 des Sägeblattes 1 zusätzlich Aussparungen 10a bis 10d eingebracht sind, wodurch die Masse sowie das Massenträgheitsmoment des Sägeblattes verringert wird. Zugleich sind zur Verbesserung der Steifigkeit und Festigkeit Einprägungen 5a bis 5e eingebracht, die im Ausführungsbeispiel denjenigen nach Fig. 2 entsprechen. Die Aussparungen 10a bis 10d sind jeweils von mindestens einer Einprägung, ggf. von zwei verschiedenen Einprägungen begrenzt. Des Weiteren ist es auch möglich, eine oder mehrere Aussparungen ringsum von Einprägungen begrenzen zu lassen.

Fig. 11 zeigt einen Schnitt durch das Stammblatt gemäß Fig. 10 im Bereich der Aussparungen 10c, 10d. Zu erkennen ist, dass die Einprägung 5a im Wege des Prägens in das Stammblatt 2 eingebracht ist, so dass auf einer Seitenfläche des Stammblattes 2 eine Vertiefung und auf der gegenüberliegenden Seitenfläche des Stammblattes eine Erhebung entsteht. Die Vertiefung bzw. Erhebung kann über die jeweilige Seitenfläche um einen Betrag von beispielsweise 0.1 mm oder mehr eingedrückt sein bzw. überstehen.

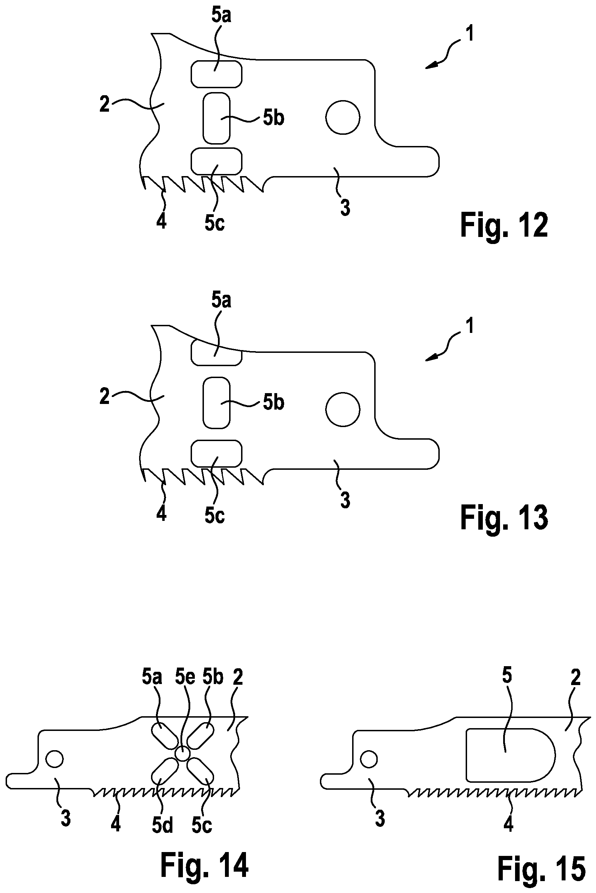

Im Ausführungsbeispiel gemäß Fig. 12 sind im Übergangsbereich zwischen dem Stammblatt 2 und dem Befestigungsschaft 3 insgesamt drei Einprägungen 5a, 5b, 5c eingebracht, die sich in Querrichtung verteilen. Die Einprägungen 5a bis 5c sind jeweils linienförmig ausgebildet und bilden den Rand eines geometrischen Musters, das näherungsweise rechteckförmig ist. Die Einprägungen 5a und 5c befinden sich jeweils benachbart zur Seitenkante bzw. Schneidkante 4, die Einprägung 5b liegt mittig zwischen den äußeren Einprägungen 5a und 5c.

Das nicht erfindungsgemäßen Ausführungsbeispiel gemäß Fig. 13 entspricht im Wesentlichen demjenigen gemäß Fig. 12, jedoch mit dem Unterschied, dass die obere, der Schneidkante 4 gegenüberliegende Einprägung 5a sich bis zur oberen Seitenkante erstreckt. Im Ausführungsbeispiel gemäß Fig. 14 sind ebenfalls in das Stammblatt 2 in unmittelbarer Nachbarschaft zum Befestigungsschaft 3 mehrere Einprägungen 5a bis 5e eingebracht. Ebenso wie bei den Ausführungsbeispielen gemäß Fig. 12 und 13 wird durch eine Spannungsverschiebung eine potenzielle Bruchlinie aus dem Randbereich von Klemmbacken, welche im montierten Zustand den Befestigungsschaft 3 umgreifen, aus dem Befestigungsschaft 3 in das Stammblatt 2 verlagert, welches eine höhere Festigkeit aufweist. Durch das Einbringen der Einprägungen wird die Festigkeit in dem einer hohen Belastung unterlegenden Übergangsabschnitt im Stammblatt 2 weiter erhöht. Gemäß Fig. 14 sind die Einprägungen 5a bis 5e in Form eines Kreuzes ausgeführt, wobei sich die Einprägungen nicht schneiden.

Im nicht erfindungsgemäßen Ausführungsbeispiel gemäß Fig. 15 ist die Einprägung 5, welche ebenfalls in das Stammblatt 2 in unmittelbarer Nachbarschaft zum Befestigungsschaft 3 eingebracht ist, flächig ausgebildet und weist näherungsweise Rechteckform mit einer abgerundeten Schmalseite auf.

## Patentansprüche

1. Stich- bzw. Säbelsägeblatt für eine Werkzeugmaschine, insbesondere für eine Handwerkzeugmaschine, mit zwei Seitenflächen, mit einem Stammblatt (2), das eine Schneidkante (4) mit Schneidzähnen und eine gegenüberliegende Seitenkante aufweist, sowie mit einem einteilig mit dem Stammblatt (2) ausgebildeten Befestigungsschaft (3) zur Befestigung an der Werkzeugmaschine, wobei in das Stammblatt (2) und/oder in den Befestigungsschaft (3) mindestens eine Einprägung (5) eingebracht ist, **dadurch gekennzeichnet, dass** im Übergangsbereich zwischen dem Stammblatt (2) und dem Befestigungsschaft (3) mehrere Einprägungen (5, 5a, 5c) eingebracht sind, wobei alle Einprägungen in die gleiche Seitenfläche des Stich- bzw. Säbelsägeblatts eingebracht sind und die Einprägungen auf Abstand zueinander und auf Abstand zur Seitenkante des Sägeblatts angeordnet sind, wodurch die Festigkeit im Übergangsbereich erhöht ist.

2. Sägeblatt nach Anspruch 1, **dadurch gekennzeichnet, dass** zumindest eine Einprägung (5) linien- bzw. streifenförmig ausgebildet ist.

3. Sägeblatt nach Anspruch 2, **dadurch gekennzeichnet, dass** zumindest eine Einprägung (5) geradlinig ausgebildet ist.

4. Sägeblatt nach Anspruch 2 oder 3, **dadurch gekennzeichnet, dass** zumindest eine Einprägung (5) gekrümmt ausgebildet ist.

5. Sägeblatt nach einem der Ansprüche 2 bis 4, **dadurch gekennzeichnet, dass** die linien- bzw. streifenförmige Einprägung (5) umlaufend geschlossen ausgebildet ist und ein geometrisches Muster bildet.

6. Sägeblatt nach einem der Ansprüche 2 bis 5, **dadurch gekennzeichnet, dass** mindestens eine Einprägung (5) zumindest abschnittsweise in Längsrichtung bzw. parallel zur Schneidkante (4) verläuft.

7. Sägeblatt nach einem der Ansprüche 2 bis 6, **dadurch gekennzeichnet, dass** mindestens eine Einprägung (5) unter einem Winkel zur Längsrichtung bzw. zur Schneidkante (4) verläuft.

8. Sägeblatt nach einem der Ansprüche 2 bis 7, **dadurch gekennzeichnet, dass** mindestens zwei Einprägungen (5) vorgesehen sind, wobei jede Einprägung zwei Eckpunkte des Stammblattes (2) verbindet.

9. Sägeblatt nach Anspruch 8, **dadurch gekennzeichnet, dass** zumindest zwei diagonal verlaufende Einprägungen (5) in das Stammblatt (2) eingebracht sind, die diagonal liegende Eckpunkte verbinden.

10. Sägeblatt nach Anspruch 8 oder 9, **dadurch gekennzeichnet, dass** zumindest zwei in Längsrichtung und/oder Querrichtung verlaufende Einprägungen (5) in das Stammblatt (2) eingebracht sind, die jeweils zwei Eckpunkte verbinden.

11. Sägeblatt nach einem der Ansprüche 1 bis 10, **dadurch gekennzeichnet, dass** mindestens eine Aussparung in das Stammblatt (2) eingebracht ist, die von mindestens einer Einprägung (5) begrenzt ist.

12. Sägeblatt nach einem der Ansprüche 1 bis 11, **dadurch gekennzeichnet, dass** zumindest eine Einprägung durch Prägen oder durch durch Walzen hergestellt ist.

13. Sägeblatt nach einem der Ansprüche 1 bis 12, **dadurch gekennzeichnet, dass** mindestens eine Einprägung (5) in das Stammblatt (2) benachbart zum Befestigungsschaft (3) eingebracht insbesondere wobei sie kreuzförmig angeordnet sind.

14. Sägeblatt nach einem der Ansprüche 1 bis 13, **dadurch gekennzeichnet, dass** zumindest eine Einprägung (5) flächig ausgebildet ist.

15. Sägeblatt nach einem der Ansprüche 1 bis 14, **dadurch gekennzeichnet, dass** die Tiefe der Einprägung (5) maximal ein Drittel der Blattdicke beträgt.

16. Sägeblatt nach einem der Ansprüche 1 bis 15, **dadurch gekennzeichnet, dass** die Breite der Einprägung (5) maximal ein Drittel der Blatthöhe beträgt.

17. Sägeblatt nach einem der Ansprüche 1 bis 16, **dadurch gekennzeichnet, dass** das Sägeblatt lokale chemische Nachbearbeitungen, beispielsweise durch Beschichten aufweist.

18. Sägeblatt nach einem der Ansprüche 1 bis 17, **dadurch gekennzeichnet, dass** das Sägeblatt lokale thermische Nachbearbeitungen, beispielsweise durch Induktionshärten aufweist.

19. Sägeblatt nach einem der Ansprüche 1 bis 18, **dadurch gekennzeichnet, dass** in einem Übergangsbereich zwischen dem Stammblatt (2) und dem Befestigungsschaft (3) drei Einprägungen (5a, 5b, 5c) eigebracht sind die sich in Querrichtung verteilen.

20. Sägeblatt nach einem der Ansprüche 19, **dadurch gekennzeichnet, dass** sich zwei der drei Einprägungen (5a und 5c) jeweils benachbart zur Seitenkante bzw. Schneidkante (4) befinden, wobei die dritte der drei Einprägung (5b) mittig zwischen den zwei äußeren Einprägungen (5a und 5c) liegt.

21. Werkzeugmaschine, insbesondere Handwerkzeugmaschine, mit einem Sägeblatt (1) nach einem der Ansprüche 1 bis 20.

## Claims

1. Jigsaw blade or reciprocating saw blade for a power tool, in particular for a hand-held power tool, having two lateral surfaces, having a blade body (2) which has a cutting edge (4) with cutting teeth and has an opposite lateral edge, and also having a fixing shank (3), formed in one piece with the blade body (2), for fixing to the power tool, wherein at least one impression (5) has been introduced into the blade body (2) and/or into the fixing shank (3), **characterized in that** a plurality of impressions (5, 5a, 5c) have been introduced in the transition region between the blade body (2) and the fixing shank (3), wherein all the impressions have been introduced into the same lateral surface of the jigsaw blade or reciprocating saw blade and the impressions are arranged at a distance from one another and at a distance from the lateral edge of the saw blade, with the result that the strength in the transition region is increased.

2. Saw blade according to Claim 1, **characterized in that** at least one impression (5) is configured in a linear or strip-form manner.

3. Saw blade according to Claim 2, **characterized in that** at least one impression (5) is configured in a rectilinear manner.

4. Saw blade according to Claim 2 or 3, **characterized in that** at least one impression (5) is configured in a curved manner.

5. Saw blade according to one of Claims 2 to 4, **characterized in that** the linear or strip-form impression (5) is configured in a peripherally closed manner and forms a geometrical pattern.

6. Saw blade according to one of Claims 2 to 5, **characterized in that** at least one impression (5) extends at least partially in the longitudinal direction or parallel to the cutting edge (4).

7. Saw blade according to one of Claims 2 to 6, **characterized in that** at least one impression (5) extends at an angle to the longitudinal direction or to the cutting edge (4).

8. Saw blade according to one of Claims 2 to 7, **characterized in that** at least two impressions (5) are provided, wherein each impression connects two corners of the blade body (2).

9. Saw blade according to Claim 8, **characterized in that** at least two diagonally extending impressions (5) that connect diagonally located corners have been introduced into the blade body (2).

10. Saw blade according to Claim 8 or 9, **characterized in that** at least two impressions (5) that extend in the longitudinal direction and/or transverse direction and each connect two corners have been introduced into the blade body (2).

11. Saw blade according to one of Claims 1 to 10, **characterized in that** at least one cutout which is delimited by at least one impression (5) has been introduced into the blade body (2).

12. Saw blade according to one of Claims 1 to 11, **characterized in that** at least one impression has been produced by stamping or by rolling.

13. Saw blade according to one of Claims 1 to 12, **characterized in that** at least one impression (5) has been introduced into the blade body (2) next to the fixing shank (3), in particular wherein they are arranged in the form of a cross.

14. Saw blade according to one of Claims 1 to 13, **characterized in that** at least one impression (5) is configured in an extensive manner.

15. Saw blade according to one of Claims 1 to 14, **characterized in that** the depth of the impression (5) is at most one third of the blade thickness.

16. Saw blade according to one of Claims 1 to 15, **characterized in that** the width of the impression (5) is at most one third of the blade height.

17. Saw blade according to one of Claims 1 to 16, **characterized in that** the saw blade has local chemical finishing treatments, for example by coating.

18. Saw blade according to one of Claims 1 to 17, **characterized in that** the saw blade has local thermal finishing treatments, for example by induction hardening.

19. Saw blade according to one of Claims 1 to 18, **characterized in that** three impressions (5a, 5b, 5c), which are distributed in the transverse direction, have been introduced in the transition region between the blade body (2) and the fixing shank (3).

20. Saw blade according to one of Claims 19, **characterized in that** two of the three impressions (5a and 5c) are respectively located next to the lateral edge and cutting edge (4), wherein the third of the three impressions (5b) lies centrally between the two outer impressions (5a and 5c).

21. Power tool, in particular hand-held power tool, having a saw blade (1) according to one of Claims 1 to 20.

## Revendications

1. Lame de scie sauteuse ou de scie sabre pour une machine-outil, en particulier pour une machine-outil à main, comprenant deux faces latérales, un corps de lame (2) qui présente une arête tranchante (4) dotée de dents de coupe et une arête latérale opposée, ainsi qu'une tige de fixation (3) réalisée d'un seul tenant avec le corps de lame (2) en vue de la fixation sur la machine-outil, au moins une empreinte (5) étant pratiquée dans le corps de lame (2) et/ou dans la tige de fixation (3),
**caractérisée en ce que** plusieurs empreintes (5, 5a, 5c) sont pratiquées dans la zone de transition entre le corps de lame (2) et la tige de fixation (3), toutes les empreintes étant pratiquées dans la même face latérale de la lame de scie sauteuse ou de scie sabre et les empreintes étant disposées à distance les unes des autres et à distance de l'arête latérale de la lame de scie ce qui augmente la solidité dans la zone de transition.

2. Lame de scie selon la revendication 1, **caractérisée en ce qu'**au moins une empreinte (5) est réalisée en forme de ligne ou de bande.

3. Lame de scie selon la revendication 2, **caractérisée en ce qu'**au moins une empreinte (5) est réalisée de manière rectiligne.

4. Lame de scie selon la revendication 2 ou 3, **caractérisée en ce qu'**au moins une empreinte (5) est réalisée de manière courbe.

5. Lame de scie selon l'une quelconque des revendications 2 à 4, **caractérisée en ce que** l'empreinte en forme de ligne ou de bande (5) est réalisée de manière fermée en périphérie et forme un motif géométrique.

6. Lame de scie selon l'une quelconque des revendications 2 à 5, **caractérisée en ce qu'**au moins une empreinte (5) s'étend au moins par endroits dans la direction longitudinale ou en parallèle à l'arête tranchante (4).

7. Lame de scie selon l'une quelconque des revendications 2 à 6, **caractérisée en ce qu'**au moins une empreinte (5) s'étend selon un angle par rapport à la direction longitudinale ou à l'arête tranchante (4).

8. Lame de scie selon l'une quelconque des revendications 2 à 7, **caractérisée en ce qu'**au moins deux empreintes (5) sont prévues, chaque empreinte reliant deux sommets du corps de lame (2).

9. Lame de scie selon la revendication 8, **caractérisée en ce qu'**au moins deux empreintes (5) s'étendant en diagonale sont pratiquées dans le corps de lame (2) et relient des sommets diagonalement opposés.

10. Lame de scie selon la revendication 8 ou 9, **caractérisée en ce qu'**au moins deux empreintes (5) s'étendant dans la direction longitudinale et/ou la direction transversale sont pratiquées dans le corps de lame (2) et relient respectivement deux sommets.

11. Lame de scie selon l'une quelconque des revendications 1 à 10, **caractérisée en ce qu'**au moins un évidement est pratiqué dans le corps de lame (2) qui est délimité par au moins une empreinte (5).

12. Lame de scie selon l'une quelconque des revendications 1 à 11, **caractérisée en ce qu'**au moins une empreinte est fabriquée par estampage ou par laminage.

13. Lame de scie selon l'une quelconque des revendications 1 à 12, **caractérisée en ce qu'**au moins une empreinte (5) est pratiquée dans le corps de lame (2) à côté de la tige de fixation (3), en étant en particulier disposées en croix.

14. Lame de scie selon l'une quelconque des revendications 1 à 13, **caractérisée en ce qu'**au moins une empreinte (5) est réalisée de manière plane.

15. Lame de scie selon l'une quelconque des revendications 1 à 14, **caractérisée en ce que** la profondeur de l'empreinte (5) mesure au maximum un tiers de l'épaisseur de lame.

16. Lame de scie selon l'une quelconque des revendications 1 à 15, **caractérisée en ce que** la largeur de l'empreinte (5) mesure au maximum un tiers de la hauteur de lame.

17. Lame de scie selon l'une quelconque des revendications 1 à 16, **caractérisée en ce que** la lame de scie présente des finitions chimiques, par exemple par revêtement.

18. Lame de scie selon l'une quelconque des revendications 1 à 17, **caractérisée en ce que** la lame de scie présente des finitions thermiques locales, par exemple par durcissement par induction.

19. Lame de scie selon l'une quelconque des revendications 1 à 18, **caractérisée en ce que** dans une zone de transition entre le corps de lame (2) et la tige de fixation (3), trois empreintes (5a, 5b, 5c) sont pratiquées qui sont réparties dans la direction transversale.

20. Lame de scie selon l'une quelconque des revendications 19, **caractérisée en ce que** deux des trois empreintes (5a et 5c) se trouvent respectivement à côté de l'arête latérale ou de l'arête tranchante (4), la troisième des trois empreintes (5b) se trouvant au centre entre les deux empreintes extérieures (5a et 5c) .

21. Machine-outil, en particulier machine-outil à main, comprenant une lame de scie (1) selon l'une quelconque des revendications 1 à 20.
